# EUROPÄISCHE PATENTSCHRIFT

(11) **EP 1 125 678 B1**
(45) Veröffentlichungstag und Bekanntmachung des Hinweises auf die Patenterteilung: **08.11.2006**
(21) Anmeldenummer: 00116128.0
(22) Anmeldetag: 31.07.2000
(51) Int. Cl.: B23Q 7/10, B23P 19/00, B23Q 7/14, B23Q 7/04, B23Q 39/04, B23Q 11/08

(54) **Automationszelle zur Handhabung von auf Teileträgern aufgenommenen Teilen**
Automation system for handling workpieces mounted on carriers
Cellule d'automatisation pour manipuler des pièces montées sur des supports de pièces

(30) Priorität: 16.02.2000 DE 10007024
(43) Veröffentlichungstag der Anmeldung: 22.08.2001
(73) Patentinhaber: FELSOMAT GmbH & Co. KG, D-75203 Königsbach-Stein (DE)
(72) Erfinder: Jäger, Helmut F., 75203 Königsbach-Stein 2 (DE)
(74) Vertreter: Kohler Schmid Möbus

(56) Entgegenhaltungen:
- EP-A- 0 865 869
- EP-A- 0 960 687

## Beschreibung

Die Erfindung betrifft eine Automationszelle zur Handhabung von auf Teileträgern aufgenommenen Teilen, mit einem nach außen abgeschlossenen Arbeitsraum, in dem ein erster, ein zweiter und ein dritter Stapelplatz hintereinander angeordnet sind, von denen der erste gegenüber den übrigen Stapelplätzen berührungssicher abtrennbar ist, und mit einer Umsetzeinrichtung, die eine erste, sich in Horizontalrichtung entlang der hintereinander angeordneten Stapelplätze erstreckende Linearachse, sowie eine zweite damit gekoppelte, sich in Vertikalrichtung erstrekkende Linearachse aufweist, wobei die Umsetzeinrichtung eine Bewegung von Teileträgern in der Horizontalrichtung und in der Vertikalrichtung, sowie eine Positionierung von Teileträgern für eine zugeordnete Übergabeeinheit erlaubt, wobei die Übergabeeinheit eine Entnahme von Teilen aus den Teileträgern und Überführung zu einer externen Einrichtung außerhalb des Arbeitsraums, sowie ein Einführen von Teilen in den Arbeitsraum und ein Einlegen in die Teileträger erlaubt, und wobei der erste Stapelplatz durch eine Tür von außen in der ersten Horizontalrichtung beschickbar ist.

Eine derartige Automationszelle ist aus der EP 0 865 869 A1 bekannt.

Die bekannte Automationszelle weist innerhalb eines nach außen abgeschlossenen Arbeitsraums einen Palettierer auf, der Werkstückträger zwischen zwei Stapelplätzen hin- und herstapeln kann und zusätzlich in eine dritte dazwischen liegende Position nach oben bringen kann, so daß mit einem Portalgreifer von einem quer darüber verlaufenden Portal einzelne Teile aus dem Teileträger aufgenommen und andere Teile darin abgelegt werden können. Zusätzlich ist ein Stapelaustauschmodul mit einem Drehtisch vorgesehen, um Teileträgerstapel in einen vorgelagerten Laderaum einschleusen zu können, während innerhalb des dagegen abgeschotteten Arbeitsraums einzelne Teileträger gehandhabt werden können. Um einen Teileträgerstapel mit Rohteilen in den Arbeitsraum einzuschleusen und einen anderen Stapel mit Fertigteilen aus diesem auszuschleusen, wird der Drehtisch um 180° gedreht.

Der Aufbau einer derartigen Automationszelle ist relativ aufwendig, da neben der Palettiereinrichtung zusätzlich ein Stapelaustauschmodul vorgesehen werden muß. Außerdem ist der Platzbedarf der Automationszelle relativ groß.

Ein weiterer Nachteil besteht dann, wenn eine sogenannte "stapelreine Logistik" gewünscht ist, d.h. wenn vermieden werden soll, daß Teile aus einem Teileträgerstapel mit Teilen eines anderen Teileträgerstapels vermischt werden. In einem solchen Fall sind relativ hohe Stillstands- bzw. Wechselzeiten notwendig.

Aus der DE 198 05 206 A1 ist eine weitere Handhabungsvorrichtung bekannt, bei der innerhalb eines nach außen abgeschlossenen Arbeitsraums hintereinander drei Stapelplätze vorgesehen sind, zwischen denen Werkstückträgerstapel auf ihren Bodenrollern hin- und hergeschoben werden können. Die Werkstückträgerstapel werden von der Seite her in die betreffenden Stapelplätze eingeschoben bzw. aus diesen entnommen. Eine Werkstückträgerhandhabungseinheit übernimmt die Werkstückträger in einer Aufnahmeposition und legt sie in einer Abnahmeposition nach Bearbeitung wieder ab. Dabei können zwischen den einzelnen Werkstückträgerstapeln Schutzwände eingefahren werden, um eine verbesserte Arbeitssicherheit zu erreichen.

Als nachteilig hat sich bei der bekannten Vorrichtung das notwendige Ein- und Ausfahren von Werkstückträgerstapeln in die Vorrichtung bzw. aus der Vorrichtung von der Seite her erwiesen. Dies führt zu einem erhöhten Platzbedarf. Darüber hinaus ist nicht ersichtlich, wie lediglich durch einfahrbare Schutzwände eine vollständige Arbeitssicherheit gewährleistet werden kann.

Ein weiterer Nachteil besteht darin, daß die Bewegung der Werkstückträgerstapel innerhalb der Vorrichtung auf Bodenrollern erfolgt. Dies führt zu einer Abhängigkeit der Funktionssicherheit von der Bodenbeschaffenheit und Ausrichtung und kann insbesondere bei relativ schweren Werkstückträgerstapeln zum Verrutschen des ganzen Stapels oder auch nur einzelner Werkstückträger führen, wodurch die Funktionssicherheit und Positioniergenauigkeit bei der Handhabung stark beeinträchtigt werden kann. Somit ist die bekannte Vorrichtung als Automationszelle für einen automatischen oder zumindest teilweise automatisierten Fertigungsablauf kaum geeignet.

Aus der EP 0 960 687 A2 ist eine weitere Automationszelle zur Handhabung von Teilen bekannt. Die Automationszelle weist einen Handhabungsraum auf, innerhalb dessen ein Schleusenplatz für Teileträger vorgesehen ist. Der Schleusenplatz ist gebildet durch eine feststehende Haube und eine Schottwand, die vertikal verfahrbar ist. Zum Überführen von Teileträgern aus dem Schleusenraum in den Handhabungsraum wird die Schottwand vertikal nach unten gefahren, und der Teileträger wird in horizontaler Richtung aus dem Schleusenraum in den Handhabungsraum verfahren.

Der Erfindung liegt somit die Aufgabe zugrunde, eine verbesserte Automationszelle zur Handhabung von auf Teileträgern aufgenommenen Teilen zu schaffen, die bei einem möglichst geringen Platzbedarf einen kostengünstigen Aufbau besitzt und gleichzeitig eine möglichst flexible Betriebsweise bei der Handhabung von Teilen innerhalb eines berührungssicher nach außen abgeschlossenen Arbeitsraums erlaubt. Dabei soll eine möglichst hohe Präzision bei den Handhabungsvorgängen erreicht werden.

Ferner soll ein Verfahren zur Handhabung von Teilen in einer Automationszelle angegeben werden, das einfach realisierbar ist und eine flexible Steuerung ermöglicht, wobei eine stapelreine Logistik als auch ein möglichst schneller Durchlauf von Teilen ermöglicht werden soll.

Diese Aufgabe wird erfindungsgemäß bei einer Automationszelle gemäß der eingangs genannten Art dadurch gelöst, daß der erste Stapelplatz gegenüber dem zweiten, dazu benachbarten Stapelplatz durch eine sich im wesentlichen vertikal erstreckende Schottwand und gegenüber dem übrigen Teil des Arbeitsraums durch eine Haube berührungssicher abgetrennt ist, die zumindest zwischen dem ersten und dem zweiten Stapelplatz verfahrbar ist.

Hinsichtlich des Verfahrens wird die Aufgabe der Erfindung durch ein Verfahren zur Handhabung von Teilen in einer Automationszelle gelöst, in der ein erster, ein zweiter und ein dritter Stapelplatz innerhalb eines geschlossenen Arbeitsraums in einer Horizontalrichtung hintereinander angeordnet sind und Teileträger zur Aufnahme der Teile mittels einer Umsetzeinrichtung zwischen den drei Stapelplätzen umgestapelt werden, wobei Teile mittels einer Übergabeeinheit aus den Teileträgern entnommen werden, an eine angekoppelte Einrichtung, vorzugsweise eine Bearbeitungseinrichtung, außerhalb des Arbeitsraums übergeben werden und Teile aus der angekoppelten Einrichtung aufgenommen und in den Teileträgern abgelegt werden, wobei Teileträgerstapel mit Rohteilen in Horizontalrichtung auf den ersten Stapelplatz in den Arbeitsraum eingeschleust werden und Teileträgerstapel mit Fertigteilen vom ersten Stapelplatz aus dem Arbeitsraum in einer entgegengesetzten Richtung ausgeschleust werden, und wobei Teileträger über eine zwischen dem ersten Stapelplatz und dem zweiten, dazu benachbarten Stapelplatz angeordnete, sich im wesentlichen vertikal erstreckende Schottwand hinaus angehoben und in der Horizontalrichtung bewegt werden, nachdem eine Haube, die zumindest zwischen dem ersten und dem zweiten Stapelplatz verfahrbar ist, von dem ersten Stapelplatz weg verfahren worden ist.

Die Aufgabe der Erfindung wird auf diese Weise vollkommen gelöst.

Auf diese Weise wird nämlich eine Automationszelle mit drei hintereinander liegenden Stapelplätzen geschaffen, in deren geschlossenem Arbeitsraum das Umsetzen der Teileträger zwischen den einzelnen Stapelplätzen sowie die Bereitstellung der Teileträger für eine zugeordnete Übergabeeinheit, wie einen Portalgreifer, der an einem darüber verlaufenden Portal verfahrbar ist, mit nur einer einzigen Umsetzeinrichtung erreicht werden kann.

Auf diese Weise wird der Aufbau der Automationszelle deutlich vereinfacht, und es läßt sich ein sehr geringer Platzbedarf verwirklichen. Durch eine spezielle Strategie der Umsetzung von Teileträgern zwischen den einzelnen Stapelplätzen läßt sich ein schneller Bearbeitungsablauf und eine gute Anpassung an zugeordnete Bearbeitungseinrichtungen mit sehr kurzen Taktzeiten verwirklichen. Durch die Anordnung einer Schottwand zwischen dem ersten und dem zweiten Stapelplatz läßt sich der erste Stapelplatz in Verbindung mit der Haube, die zumindest zwischen dem ersten und dem zweiten Stapelplatz verfahrbar ist, berührungssicher gegen den übrigen Teil des Arbeitsraums abtrennen. Auf diese Weise können Teileträger zwischen dem zweiten und dem dritten Stapelplatz bewegt werden, während gleichzeitig ein Teileträgerstapel auf den ersten Stapelplatz eingeschleust oder von diesem ausgeschleust werden kann. Trotz des äußerst einfachen Aufbaus der Automationszelle wird auf diese Weise eine Entkopplung der Handhabungsvorgänge innerhalb des Arbeitsraums vom Be- und Entladevorgang der Automationszelle bei geöffneter Tür gewährleistet. Da die Teileträger nicht auf Bodenrollen innerhalb des Arbeitsraums verschoben werden, sondern mittels der Umsetzeinrichtung bewegt werden, ergibt sich ferner eine größere Präzision bei der Handhabung.

Mit einem derartigen Konzept ergibt sich ferner ein besonders einfacher und kostengünstiger, sowie platzsparender Aufbau.

Eine solche Automationszelle läßt sich besonders vorteilhaft auch in Verbindung mit einem verketteten Fertigungssystem verwenden, bei dem eine Mehrzahl von Automationszellen als Puffer zwischen verschiedenen Bearbeitungsstationen angeordnet sind, wobei der Teiletransport zwischen den einzelnen Stationen und den Zellen über auf Portalen verfahrbare Portalgreifer erfolgt.

In vorteilhafter Weiterbildung der Erfindung ist die Schottwand feststehend ausgebildet.

Auf diese Weise ergibt sich ein besonders einfacher und platzsparender Aufbau, wobei die Teileträger zum Verfahren zwischen dem ersten und dem zweiten Stapelplatz über die Schottwand hinweggehoben werden.

Für Wartungszwecke läßt sich die Schottwand relativ einfach aushängen, um einen einfachen Zugang in den Arbeitsraum der Zelle zu erhalten.

In zusätzlicher Weiterbildung der Erfindung ist die Schottwand mit Zentrierflächen zur Führung und Zentrierung von zum ersten Stapelplatz zugeführten Teileträgern versehen.

Zusätzlich können der Schottwand Führungselemente zugeordnet sein, die zur Zentrierung von zugeführten Teileträgern seitlich auf diese zustellbar angeordnet sind.

Des weiteren können im Bereich des ersten Stapelplatzes Führungsschienen vorgesehen sein, die zur Übernahme von Werkstückträgern von einem Bodenroller in eine definierte Endlage vorzugsweise mit Stellelementen versehen sind. Bei den Führungsschienen kann es sich um Träger handeln, auf denen Rollen angeordnet sind.

Durch diese Maßnahmen kann gewährleistet werden, daß Teileträgerstapel, die ungleichmäßig gestapelt sind, wie dies beispielsweise bei aus einer Härteanlage kommenden Teilen der Fall sein kann, beim Einfahren auf den ersten Stapelplatz sauber zentriert werden und an der Schottwand ausgerichtet werden. Hierbei ergibt sich eine definierte Endlage.

Insgesamt ergibt sich so eine optimale Positionierung der Teileträger auf dem ersten Stapelplatz, was zu einer hohen Genauigkeit bei späteren Handhabungsvorgängen führt und Fehler bei der Handhabung vermeidet.

Die Haube ist in vorteilhafter Weiterbildung der Erfindung U-förmig mit einer Deckfläche und mit zwei Seitenflächen ausgebildet.

Hierdurch ergibt sich ein einfacher Aufbau, wobei sich eine geeignete Verfahr- und Führungsmöglichkeit für die Haube im unteren Bereich der Seitenflächen anordnen läßt.

Vorzugsweise ist die Haube zwischen dem ersten und dem zweiten und dem dritten Stapelplatz verfahrbar angeordnet.

Auf diese Weise ergibt sich eine höhere Flexibilität bei der Handhabung der Teile bzw. Teileträger innerhalb des Arbeitsraums.

Die Haube kann mittels der Umsatzeinrichtung verfahrbar sein.

Darüber hinaus kann eine eigene Antriebsvorrichtung für die Haube vorgesehen sein, die eine Positionierung über dem ersten, dem zweiten oder dem dritten Stapelplatz erlaubt.

Auf diese Weise lassen sich Totzeiten vermeiden, die durch ein Verfahren der Haube mittels der Umsatzeinrichtung entstehen können. Auf diese Weise lassen sich auch kürzere Taktzeiten, die durch eine externe Bearbeitungseinrichtung vorgegeben werden, realisieren.

Soweit noch kürzere Taktzeiten erforderlich sind, kann auch die Haube selbst an ihrer Oberseite zur Aufnahme mindestens eines Teileträgers ausgebildet sein.

Auf diese Weise kann die Haube zum dritten Stapelplatz verfahren werden, während die Umsatzeinrichtung Teileträger zwischen dem ersten und dem zweiten Stapelplatz umsetzt.

Darüber hinaus kann auf der Oberseite der Haube eine Schublade zur Aufnahme eines Teileträgers vorgesehen sein, die ein Verfahren des Teileträgers bei geöffneter Bedienungstür nach außen erlaubt.

Dies ermöglicht das Ein- und Ausschleusen von Prüfteilen und darüber hinaus einen Betrieb der Zelle nur mit einem Teileträger unabhängig von den darin gespeicherten Teileträgern, um z.B. kurzzeitig eine Kleinserie in den Arbeitsablauf einschieben zu können.

Zur Verriegelung der Haube in den drei vorgegebenen Positionen über dem ersten, dem zweiten bzw. dem dritten Stapelplatz kann eine um ihre Längsachse schwenkbare Welle vorgesehen sein, die mit Verriegelungszapfen versehen ist, die mit einer Zapfenaufnahme an der Haube in den vorgegebenen Positionen verriegelbar sind.

Auf diese Weise ergibt sich eine einfache Verriegelungsmöglichkeit für die Haube.

Zusätzlich kann eine Gerätebodenwanne bis unter die Haube und die Schottwand geführt sein, wobei von der Gerätebodenwanne Abtropfflächen hervorstehen, die die Ränder eines Bodenrollers, der in den ersten Stapelplatz eingeschoben ist, seitlich überlappen.

Auf diese Weise kann eine Verschleppung von Kühlschmierstoff vermieden werden, der von Teilen oder Teileträgern im ersten Stapelplatz nach unten abtropft, da dieser auf dem Bodenroller aufgefangen werden kann. Innerhalb des Arbeitsraumes werden Abtropfverluste durch die Gerätebodenwanne vermieden.

Die horizontale Linearachse der Umsetzeinrichtung ist vorzugsweise an einem U-förmigen Gestell ausgebildet, an dem an beiden Längsseiten Horizontalführungen vorgesehen sind, zwischen denen eine Greifeinrichtung zur Handhabung eines Teileträgers in Richtung der Schenkel verfahrbar aufgenommen ist, wobei die Horizontalführungen jeweils an einer Vertikalführung in Vertikalrichtung verfahrbar aufgenommen sind

Auf diese Weise ergibt sich eine besonders einfache und stabile Konstruktion für die Umsetzeinrichtung, wobei es gleichzeitig ermöglicht ist, Antrieb und Führungen der Vertikalachse in einen Vertikalträger der Automationszelle zu integrieren, der Teil eines stabilen Rahmens ist, an dem die Zelle aufgenommen ist.

Dieser stabile Rahmen, der aus einem mittleren Bodenteil, einem vorderen vertikalen Rahmenteil im Bereich der Tür sowie einem hinteren Rahmenteil bestehen kann, ermöglicht einen kompakten Aufbau, und gleichzeitig können die oberen Enden des vorderen und hinteren Rahmenteils als Stützflächen für aufgelegte Portale dienen.

In vorteilhafter Weiterbildung der Erfindung ist der erste Stapelplatz der Automationszelle nach außen durch mindestens eine Bedienungstür berührungssicher abgeschlossen, durch die Teileträger in die Automationszelle ein- und ausgeschleust werden können, wobei zwischen der mindestens einen Bedienungstür und der Haube eine mechanische Verriegelung gebildet ist, die ein Öffnen der mindestens einen Tür nur dann erlaubt, wenn sich die Haube über dem ersten Stapelplatz befindet.

Auf diese Weise kann auf die sonst bei Bedienungstüren erforderliche elektrische Absicherung mit Sicherheitsendschaltern verzichtet werden, was zu einer deutlichen Kostenersparnis führt. Außerdem wird die Betriebssicherheit erhöht, da sonst gegebenenfalls störungsanfällige Endschalter nicht mehr notwendig sind.

In zusätzlicher Weiterbildung der Erfindung ist eine Wartungstür an einer Stirnfläche der Automationszelle im Bereich des ersten Stapelplatzes vorgesehen, die randseitig an mindestens einer Vertikalseite des vorderen Rahmenteils verschwenkbar festgelegt ist, wobei die mindestens eine Bedienungstür an der Wartungstür vorgesehen ist.

Auf diese Weise ist die gesamte Automationszelle bei geöffneter Wartungstür von außen zugänglich, so daß Wartungsarbeiten einfach durchgeführt werden können. Die Wartungstür ist entweder an der rechten oder an der linken Vertikalseite oder an beiden Vertikalseiten des vorderen Rahmenteils verschwenkbar festgelegt und so mechanisch verriegelt, daß ein Öffnen der Wartungstür nur mittels eines Werkzeuges, z.B. eines Inbus-Schlüssels, möglich ist. Auf diese Weise ist keine zusätzliche elektrische Absicherung mittels Sicherheitsendschaltern notwendig.

Mit dem erfindungsgemäßen Verfahren läßt sich eine stapelreine Logistik, bei der sämtliche Teile eines Teileträgerstapels nach der Bearbeitung wieder in diesen Stapel aufgenommen werden, auf einfache Weise realisieren.

In vorteilhafter Weiterbildung dieses Verfahrens werden während mindestens eines Umstapelvorgangs eines Teileträgerstapels von einem Stapelplatz zu einem anderen Stapelplatz nur ein Teil der Rohteile aus dem Teileträger entnommen und gegen Fertigteile aus der angekoppelten Einrichtung ausgetauscht.

Hierbei können ferner während mindestens eines Umstapelvorgangs in Teileträgern noch vorhandene Rohteile gegen Fertigteile aus der angekoppelten Vorrichtung ausgetauscht werden, um die jeweiligen Teileträger mit Fertigteilen aufzufüllen.

Durch diese Maßnahmen können Verzögerungen durch das Umstapeln von Teileträgern vermieden werden, indem nicht alle Teile eines Teileträgers nacheinander abgearbeitet und zu der zugeordneten Bearbeitungseinrichtung überführt werden, sondern zumindest ein Teil ausgespart wird, so daß an jedem Teileträger ein Rohteil verbleibt, das bei einem späteren Zurückstapeln abgearbeitet und gegen ein Fertigteil ausgetauscht werden kann.

Durch das erfindungsgemäße Verfahren kann die Automationszelle vorteilhaft so betrieben werden, daß sich trotz der lediglich einen Umsetzvorrichtung mit zwei Linearachsen praktisch keine Verzögerungen bei der Versorgung der angeschlossenen Bearbeitungs- oder Montagevorrichtung ergeben.

Gleichzeitig ergibt sich der weitere Vorteil, daß ein sogenanntes Auffrischen der in der Automationszelle aufgenommenen Teile ("Auffrischen eines Puffers"), d.h. ein Austauschen der in der Automationszelle während eines größeren Zeitraums verbliebenen Teile gegen neue Teile, ohne größeren Aufwand durchführbar ist. Des weiteren ist ein Betrieb nach dem FIFO-Prinzip (first-in/first-out) möglich.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein verkettetes Fertigungssystem, in dem erfindungsgemäße Automationszellen verwendet werden können;
- Fig. 2: eine herkömmliche Automationszelle in schematischer Darstellung;
- Fig. 3: eine erfindungsgemäße Automationszelle, die vorzugsweise bei dem Fertigungssystem gemäß Fig. 1 eingesetzt wird, in schematischer Darstellung;
- Fig. 4: eine teilweise freigeschnittene, perspektivische Ansicht der Automationszelle gemäß Fig. 3, bei der zum Zwecke der besseren Erkennbarkeit auf die Darstellung einer Reihe von Teilen, wie etwa der Fronttür, verzichtet wurde;
- Fig. 5: eine schematische Seitenansicht der Automationszelle gemäß Fig. 4;
- Fig. 6: eine vereinfachte Darstellung der Schottwand der Automationszelle gemäß Fig. 3 in der Seitenansicht zusammen mit einem seitlichen Führungselement für einen zugeordneten Bodenroller;
- Fig. 7: eine Aufsicht der Schottwand gemäß Fig. 6 mit zugeordneten seitlichen Führungsteilen;
- Fig. 8: eine Ansicht auf die Schottwand gemäß Fig. 6 mit zugeordnetem Bodenroller und zugeordneter Haube von vorn, in vereinfachter Darstellung;
- Fig. 9: eine vereinfachte Teilansicht auf die Haube von der Seite;
- Fig. 10: eine perspektivische Teilansicht der Automationszelle gemäß Fig. 3 von vorn mit zusätzlich angebrachter Wartungstür an der Stirnfläche und
- Fig. 11: die Automationszelle gemäß Fig. 10 bei geöffneter Wartungstür in vereinfachter Darstellung.

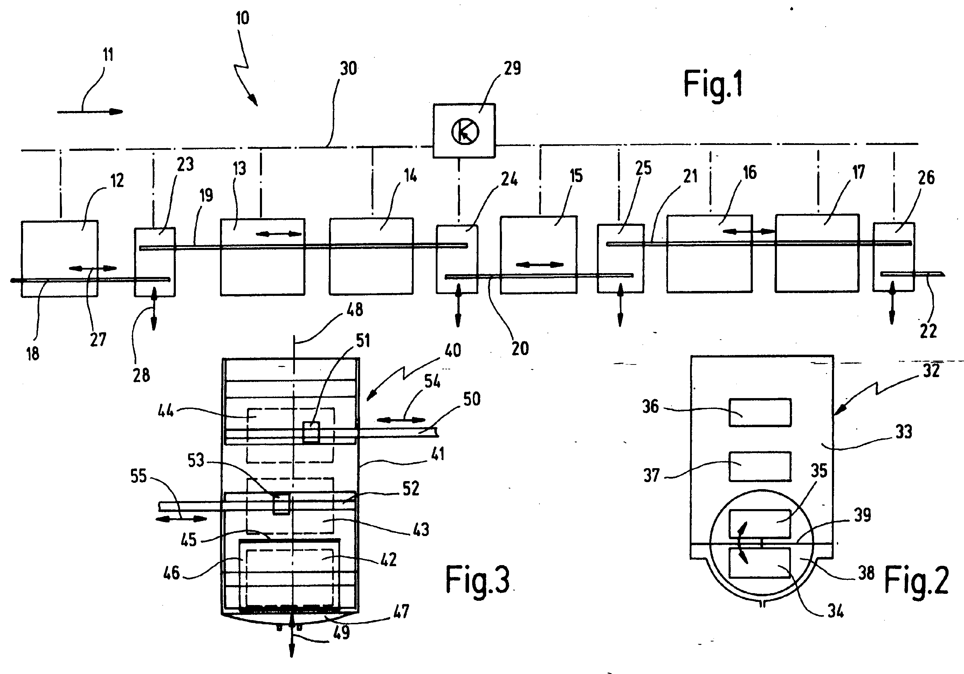

In Fig. 1 ist ein verkettetes Fertigungssystem schematisch dargestellt und insgesamt mit der Ziffer 10 bezeichnet.

Das Fertigungssystem 10 weist insgesamt sechs Bearbeitungseinrichtungen 12, 13, 14, 15, 16, 17 auf, sowie vier zugeordnete Puffer 23, 24, 25, 26 und fünf zugeordnete Portale 18, 19, 20, 21, 22.

Bei dem dargestellten System 10 handelt es sich lediglich um einen Ausschnitt eines größeren Fertigungssystems 10, das eine größere Anzahl von Bearbeitungseinrichtungen und zugeordneter Puffer aufweisen kann. Es könnte sich bspw. um 15 bis 30 Bearbeitungseinrichtungen mit einer entsprechend angepaßten Anzahl von Puffern handeln.

Gemäß Fig. 1 steht ein erster Puffer 23 über ein Portal 18 mit einer ersten Bearbeitungseinrichtung 12 in Verbindung und über ein Portal 13 mit zwei nachgeordneten Bearbeitungseinrichtungen 13, 14 und mit einem weiteren Puffer 24. Der Puffer 24 ist zusätzlich über das Portal 20 mit der Bearbeitungseinrichtung 15 und mit einem weiteren Puffer 25 gekoppelt. Der Puffer 25 ist über das Portal 21 mit zwei nachgeordneten Bearbeitungseinrichtungen 16, 17 und dem Puffer 26 verbunden. Der Puffer 26 ist wiederum über ein weiteres Portal 22 mit nachgeordneten Stationen des Fertigungssystems 10 verbunden.

Das Fertigungssystem 10 wird von Teilen in Fließrichtung 11 durchlaufen, wobei diese Teile nacheinander unterschiedlichen Bearbeitungsvorgängen an den einzelnen Bearbeitungseinrichtungen 12 bis 17 unterzogen werden. Dabei können einzelne Bearbeitungseinrichtungen, z.B. die Bearbeitungseinrichtungen 13 und 14 sowie 16 und 17, die gleiche Bearbeitungsaufgabe ausführen, um so eine parallele Bearbeitung von Werkstücken zu erlauben, um so einen erhöhten Durchsatz an einer zeitkritischen Station oder eine verbesserte Ausfallsicherheit bei Ausfall einer Station zu gewährleisten.

Bei dem anhand von Fig. 1 dargestellten Fertigungssystem erfolgt der Teilefluß durch das Fertigungssystem 10 mit Hilfe von jeweils zwei Portalen 18, 19, bzw. 19, 20, bzw. 20, 21, bzw. 21, 22, die jeweils einem Puffer 23 bzw. 24, 25, 26 zugeordnet sind.

Auf diese Weise können Teile von einer vorgeordneten Bearbeitungseinrichtung 12 etwa in den Puffer 23 überführt werden und Teile aus dem Puffer 23 in eine der nachgeordneten Bearbeitungseinrichtungen 13, 14 überführt werden, ohne daß sich Greifereinrichtungen oder dgl. innerhalb des Puffers 23 gegenseitig behindern.

Grundsätzlich wäre es jedoch auch möglich, nur ein einziges Portal zur Verbindung sämtlicher Bearbeitungseinrichtungen und Puffer zu verwenden.

An jedem Portal 18 bis 22 ist mindestens ein Portalgreifer an einem Schlitten in Längsrichtung des Portals verfahrbar, wie durch den Pfeil 27 angedeutet ist, und in Vertikalrichtung gesteuert verfahrbar, um Teile aus den Puffern 23 bis 26 aufnehmen zu können, in diese absetzen zu können und in die Bearbeitungseinrichtungen 12 bis 17 zu überführen bzw. aus diesen aufzunehmen.

Zusätzlich können in die Puffer 23, 24, 25, 26 von einer Seite aus Teileträgerstapel ein- und ausgeschleust werden, wie durch den Pfeil 28 angedeutet ist.

Sämtliche Komponenten des verketteten Fertigungssystems 10 sind dezentral gesteuert und somit autonom, jedoch für die Kommunikation mit einem Produktionsleit- und Informationssystem 29 über einen Bus 30 oder dergleichen gekoppelt.

Die Puffer 23 bis 26 sind als Automationszellen 40 gemäß Fig. 3 ausgebildet.

Der Aufbau einer herkömmlichen Automationszelle gemäß der EP 0 865 869 A1 ist zum Vergleich anhand von Fig. 2 dargestellt und kurz erläutert.

Die bekannte Automationszelle 32 gemäß Fig. 2 weist einen abgeschlossenen Arbeitsraum 33 auf, innerhalb dessen ein Stapelplatz 35 und ein weiterer Stapelplatz 36 angeordnet sind, zwischen denen ein Bereitstellungsplatz 37 vorgesehen ist. Zur Einschleusung und Ausschleusung von Teileträgerstapeln in den Arbeitsraum 33 ist zusätzlich ein Stapelaustauschmodul 38 vorgesehen, der einen durch Türen nach außen berührungssicher abtrennbaren Laderaum aufweist. Durch eine Schottwand 39, die gemeinsam mit einem Drehgestell verschwenkbar ist, auf dem der Stapelplatz 35 und ein gegenüberliegender, von außen durch die Türen zugänglicher Stapelplatz 34 angeordnet sind, wird ermöglicht, daß der äußere Stapel auf den Stapelplatz 34 bei geöffneter Außentür ein- bzw. ausgeschleust werden kann, während Teileträger auf dem gegenüberliegenden Stapelplatz 35 innerhalb des Arbeitsraums 33 gehandhabt werden. Als Umsetzeinrichtung innerhalb des Arbeitsraums 33 ist ein Einarm-Palettenumsetzer (nicht dargestellt) vorgesehen, mit dem Teileträger zwischen den Stapelplätzen 35 und 36 hin- und hergestapelt werden können und in eine obere Position auf den Bereitstellungsplatz 37 gebracht werden können, in der durch das zugeordnete Portal über den Portalgreifer (nicht dargestellt) Teile aus einem Teileträger entnommen werden können oder in diesen eingelegt werden können. Alternativ zu dem Einarm-Palettenumsetzer kann auch ein Umsetzer mit einer Horizontalachse, die an einer Vertikalachse verfahrbar aufgenommen ist, vorgesehen sein.

Die bekannte Automationszelle 32 benötigt einen Palettenumsetzer innerhalb des Arbeitsraums 33 und zusätzlich ein Stapelaustauschmodul 38. Infolge des drehbar angeordneten Stapelaustauschmoduls 38 und der insgesamt drei notwendigen Stapelplätze und des Bereitstellungsplatzes 37 zwischen den beiden Stapelplätzen 35, 36 ist die Automationszelle 32 relativ teuer in der Herstellung und besitzt einen vergleichsweise großen Platzbedarf.

Dagegen hat die erfindungsgemäße Automationszelle 40 einen verringerten Platzbedarf mit einer sehr schmalen Bauweise und läßt sich kostengünstiger herstellen.

Die Automationszelle 40 gemäß Fig. 3 weist drei Stapelplätze 42, 43, 44 auf, die in einer Horizontalrichtung 48 hintereinander angeordnet sind. Der erste Stapelplatz 42 ist nach außen durch eine Bedienungstür 47, die zwei Schwenkflügel aufweist, abgeschlossen und gegenüber dem zweiten Stapelplatz 43 durch eine feststehende Schottwand 45 abgetrennt. Bei geöffneter Bedienungstür 47 wird ein berührungssicherer Abschluß gegenüber dem übrigen Teil der Automationszelle 40 durch eine Haube 46 gewährleistet, so daß innerhalb des Arbeitsraums 41 Teileträger zwischen den beiden Stapelplätzen 43 und 44 hin- und herbewegt werden können, ohne daß bei geöffneter Bedienungstür 47 eine Unfallgefahr besteht.

Oberhalb der Automationszelle 40 verlaufen zwei Portale 50, 52, die an den beiden oberen Enden der Automationszelle 40 abgestützt sind und auf denen Portalgreifer 51 bzw. 53 in Richtung der Portale 50, 52 verfahrbar sind, wie durch die Pfeile 54 und 55 angedeutet ist, und die eine jeweils in Vertikalrichtung verfahrbare Greifeinrichtung zum Ergreifen von Teilen aufweisen.

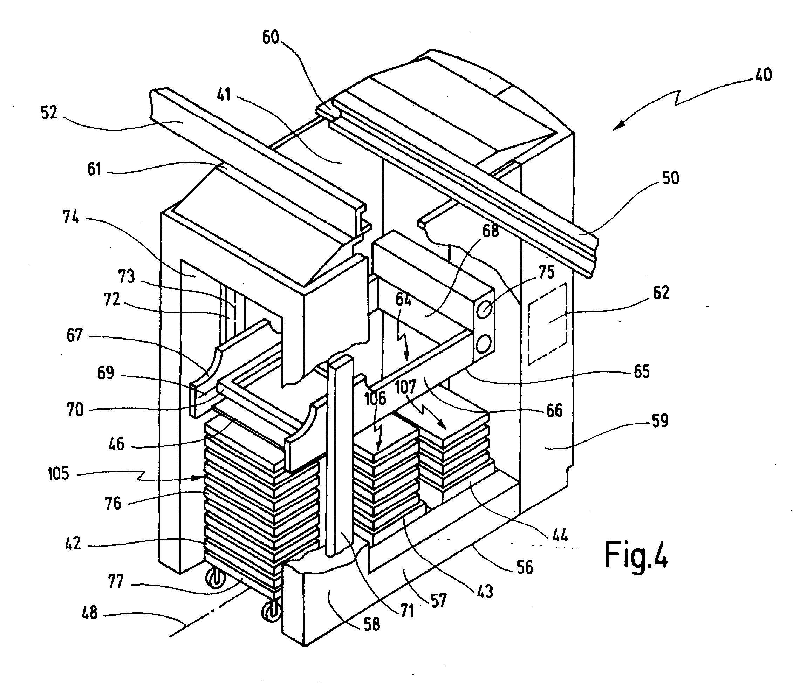

Zur Umsetzung von Teileträgern zwischen den Stapelplätzen 42, 43, 44 innerhalb des Arbeitsraums 41 und zur Bereitstellung der Teileträger für die Portalgreifer 51 bzw. 53 ist innerhalb des Arbeitsraums 41 eine Umsetzeinrichtung mit einer in Horizontalrichtung verfahrbaren Linearachse und einer in Vertikalrichtung verfahrbaren Linearachse vorgesehen, wie nachstehend noch anhand von Fig. 4 näher erläutert wird.

Die erfindungsgemäße Automationszelle 40 weist gemäß Fig. 4 einen stabilen U-förmigen Rahmen 56 mit einem mittleren Bodenelement 57 auf, einem vorderen Rahmenteil 58, an dem die beiden Türflügel ausgebildet sind, und mit einem hinteren Rahmenteil 59.

Der Rahmen 56 und die vorderen und hinteren Rahmenteile 58 und 59 sind derart verwindungssteif ausgeführt, daß die Automationszelle 40 als Ganzes mit den zugehörigen Einbauteilen, die am Rahmen 56 befestigt sind, transportiert und aufgestellt werden kann. Des weiteren sind an den oberen Enden des vorderen Rahmenteils 58 und des hinteren Rahmenteils 59 Stützflächen 60 bzw. 61 vorgesehen, auf denen die Portale 50, 52 befestigt werden können, was zu einer Vereinfachung der Gesamtanlage führt.

Im hinteren Rahmenteil 59 ist ferner eine Steuereinrichtung 62, über die der Funktionsablauf der Automationszelle 40 programmgesteuert werden kann, integriert. Innerhalb des Arbeitsraums 41 ist eine insgesamt mit der Ziffer 64 bezeichnete Umsetzeinrichtung vorgesehen, die ein Umsetzen von Teileträgern 76 zwisehen Werkstückträgerstapeln 105, 106, 107 ermöglicht, die auf den Stapelplätzen 42, 43, 44 aufgenommen sind. Ferner können in einer oberen Position aus einem Teileträger 76 mittels der an den Portalen 50, 52 verfahrbaren Portalgreifer 51, 53 (in Fig. 4 nicht dargestellt) Teile entnommen werden bzw. eingelegt werden.

Die Umsetzeinrichtung 64 weist ein U-förmiges Gestell 65 auf, mit einem Mittelteil 68, das kurz vor dem hinteren Rahmenteil 59 der Automationszelle endet, und mit zwei horizontal verlaufenden Schenkeln 66, 67. In ihrem vorderen Bereich sind die beiden Schenkel 66, 67 an zwei Vertikalträgern 71, 72, die in das vordere Rahmenteil 58 integriert sind, an Vertikalführungen 73 in Vertikalrichtung verfahrbar aufgenommen, wozu ein geeigneter Antrieb 74 mit einem Ketten- oder Zahnriementrieb in das vordere Rahmenteil 58 integriert ist. An den beiden Schenkeln 66, 67 sind Horizontalführungen 69 vorgesehen, an denen eine Greifeinrichtung 70 gesteuert verfahrbar ist, wozu ein Motor 75 im Mittelteil 68 des Gestells 65 aufgenommen ist und mit einem geeigneten Ketten- oder Zahnriementrieb gekoppelt ist.

Auf den ersten Stapelplatz 42 können bei geöffneter Tür Teileträgerstapel 105 ein- bzw. ausgefahren werden, die auf Bodenrollern 77 oder auf Grundrahmen aufgenommen sind.

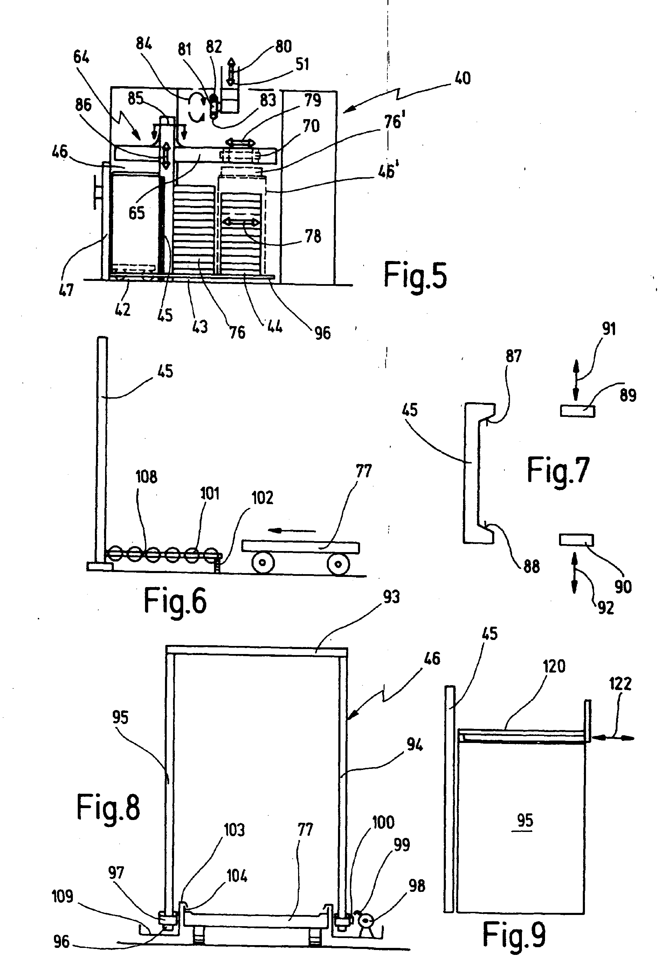

Wie anhand von Fig. 5 schematisch angedeutet ist, kann durch eine vorteilhafte Betriebsweise bei der Handhabung der Teileträger 76 trotz der einzigen Umsetzeinrichtung 64, mittels derer die Teileträger 76 zwischen den drei Stapelplätzen 42, 43, 44 in Horizontalrichtung 63 transportiert werden, ein schneller Arbeitsablauf gewährleistet werden, der an sehr kurze Taktzeiten von zugeordneten Bearbeitungseinrichtungen angepaßt werden kann, ohne daß es zu Verzögerungen kommt.

Dabei kann gleichzeitig eine stapelreine Logistik praktisch ohne Verzögerungen gewährleistet werden.

So kann beim erstmaligen Vollfahren ein Teileträgerstapel mit Rohteilen auf den ersten Stapelplatz 42 eingefahren werden. Bei geöffneter Bedienungstür 47 ist der erste Stapelplatz 42 einerseits durch die feststehende Schottwand 45 gegenüber dem zweiten Stapelplatz 43 abgetrennt und andererseits durch die U-förmige Haube 46, die sich bei geöffneter Tür über dem ersten Stapelplatz 42 befindet, so daß dieser berührungssicher gegenüber dem übrigen Teil der Automationszelle 40 abgetrennt ist.

Nach Schließen der Bedienungstür 47 wird die Haube 46 vom ersten Stapelplatz 42 weggefahren, so daß nunmehr Teileträger 76 mit Hilfe der Greifeinrichtung 70 vom ersten Stapelplatz 42 etwa auf den zweiten Stapelplatz 43 umgesetzt werden können, wie durch den Pfeil 85 angedeutet ist. Hierbei können gleichzeitig mehrere Teileträger 76 bewegt werden. Nach dem Umstapeln auf den zweiten Stapelplatz 43 können die einzelnen Teileträger 76 der Reihe nach auf den dritten Stapelplatz 44 umgesetzt werden, wobei mittels des in Vertikalrichtung 80 verfahrbaren Portalgreifers, der durch die Ziffer 51 angedeutet ist, über einen daran vorgesehenen Doppelgreifer 81 Teile 82 bzw. 83 aus dem Teileträger 76 entnommen werden bzw. in diesen eingelegt werden können.

Verzögerungen durch das Umstapeln können vermieden werden, indem nicht alle Teile eines Teileträgers nacheinander abgearbeitet und zu der zugeordneten Bearbeitungseinrichtung überführt werden, sondern zumindest ein Teil ausgespart wird, so daß etwa an jedem Teileträger 76 ein Rohteil verbleibt.

Beim späteren Zurückstapeln der Teileträger vom dritten Stapelplatz 44 zum ersten Stapelplatz 42 können dann die noch verbliebenen Rohteile abgearbeitet und gegen Fertigteile aus der Bearbeitungseinrichtung mittels des Doppelgreifers 81 ausgetauscht werden, der an dem Portalgreifer 51 verschwenkbar aufgenommen ist, wie durch den Pfeil 84 angedeutet ist. Das U-förmige Gestell 65 der Umsetzeinrichtung 64 ist, wie bereits erläutert, in Vertikalrichtung an den Vertikalträgern 71, 72 verfahrbar aufgenommen, wie durch den Doppelpfeil 86 in Fig. 5 verdeutlicht ist. Der Greifer 70 zum Erfassen der Teileträger 76 ist an dem U-förmigen Gestell 65 in Horizontalrichtung verfahrbar, wie durch den Doppelpfeil 79 angedeutet ist.

Die Haube 46, die zum Berührungsschutz dient, kann zwischen dem ersten Stapelplatz 42, 43, 44 auf einer Horizontalführung 96 verfahren werden. Dabei kann die Umsetzeinrichtung 64 zum Bewegen der Haube 46 zwischen diesen drei Positionen genutzt werden. Sofern die zugeordnete Bearbeitungseinrichtung sehr kurze Taktzeiten aufweist, kann die Haube 46 jedoch zusätzlich mit einem eigenen Antrieb ausgestattet sein. Bei besonders kurzen Taktzeiten kann ferner die Oberseite der Haube 46 selbst zur Aufnahme eines Teileträgers ausgebildet sein, wie dies durch die Ziffer 76' angedeutet ist, wenn sich die Haube in der Position 46' über dem dritten Stapelplatz 44 befindet.

Dies ermöglicht eine Entkopplung des Umsetzvorgangs zwischen den Stapelplätzen 42 und 43 von der Zuführung bzw. Entnahme von Teilen vom obersten Teileträger am dritten Stapelplatz 44.

Darüber hinaus kann auf der Oberseite der Haube 46 eine Teleskopschublade 120 zur Aufnahme eines Teileträgers 76' vorgesehen sein, die ein Verfahren des Teileträgers 76' in Pfeilrichtung 122 bei geöffneter Bedienungstür 47 nach außen erlaubt (Fig. 9). Dies erlaubt das Ein -und Ausschleusen von Prüfteilen (SPC-Teilen) und erlaubt einen Betrieb der Automationszelle 40 unabhängig von darin befindlichen Teileträgerstapeln z.B. für eine Kleinserie.

Die Schottwand 45, die in den Fig. 6 und 7 vergrößert dargestellt ist, ist vorzugsweise besonders stabil ausgeführt und ist, wie in der Aufsicht gemäß Fig. 7 erkennbar ist, an ihren beiden äußeren Enden mit Zentrierflächen 87, 88 versehen, so daß Teileträgerstapel, die auf einem Bodenroller 77 in den ersten Stapelplatz 42 eingefahren werden, über die beiden schrägen Zentrierflächen 87, 88 zentriert werden und an der geraden Fläche der Schottwand 45 ausgerichtet werden.

Zusätzlich können im vorderen Bereich, etwa im Bereich der Tür, an beiden Seiten Führungselemente 89, 90 vorgesehen sein, die beweglich angeordnet sein können, wie durch die Pfeile 91, 92 angedeutet ist, um eine Vorzentrierung eines Teileträgerstapels vor dem Einfahren in den ersten Stapelplatz 42 zu ermöglichen. Dies ist z.B. bei Teileträgern mit Teilen, die aus einer Härteanlage kommen, sinnvoll.

Zusätzlich kann gemäß Fig. 6 zur Aufnahme eines Teileträgerstapels beim Einschieben auf den ersten Stapelplatz 42 an beiden Seiten eine Führungsschiene angeordnet sein, wie durch die Ziffer 108 angedeutet ist, die verstellbar mittels eines Stellelementes 102 auf der Bodenfläche ausgerichtet werden kann. An diesen beiden Führungsschienen 108 befinden sich dann Rollen 101 zur Aufnahme des Bodenrollers unabhängig vom darunter befindlichen Boden. Ein Teileträgerstapel kann somit auf die beiden vorderen etwas abgesenkten Rollen der Führungsschiene 108 aufgeschoben und mit Schwung auf die beiden Führungsschienen 108 überführt werden, wodurch der Teileträgerstapel zusammen mit den Zentrierflächen 87, 88 an der Schottwand 45 unabhängig vom Boden sauber ausgerichtet auf dem ersten Stapelplatz 42 aufgenommen wird.

Dadurch wird eine hohe Positioniergenauigkeit bei den späteren Handhabungsvorgängen erreicht.

In der vergrößerten Darstellung von Fig. 8 ist erkennbar, daß die Haube 46 mit einer oberen Deckfläche 93 und zwei Seitenflächen 94, 95 ausgebildet ist, die an ihren unteren Enden mittels einer Antriebseinrichtung 97 auf den Horizontalführungen 96 verfahrbar aufgenommen ist.

Um eine Verriegelung der Haube 46 über dem ersten Stapelplatz 42, dem zweiten Stapelplatz 43 oder dem dritten Stapelplatz 44 zu ermöglichen, kann, wie in Fig. 8 dargestellt, seitlich neben der Haube 46 eine Welle 98 vorgesehen sein, die um ihre Längsachse verschwenkbar ist und drei Verriegelungszapfen 99 an geeigneter Stelle aufweist, die bei Erreichen der gewünschten Verriegelungsposition mit einer Zapfenaufnahme 100 an der Haube 46 verriegelt werden können.

Zusätzlich kann die gesamte Automationszelle tropfdicht ausgeführt werden, so daß eine Verschleppung von Kühlschmierstoff vermieden wird. Hierzu ist der gesamte Bereich des Arbeitsraums 41 mit einer Gerätebodenwanne 109 ausgekleidet. Gleichzeitig kann auch im Bereich des ersten Stapelplatzes 42 ein Austritt von Kühlschmiermittel dadurch verhindert werden, daß, wie in Fig. 8 dargestellt, die Gerätebodenwanne 109 beidseitig bis unterhalb der Führung 96 für die Haube 46 geführt ist, wobei davon jeweils eine Abtropffläche 103 hervorsteht, die bis über den Rand 104 des Bodenrollers 77 reicht, so daß ein zum Bodenroller 77 bestehender Zwischenraum überdeckt wird. Folglich gelangt Kühlschmiermittel, das von den Teilen oder Teileträgern abtropft, entweder auf den Bodenroller 77 oder in die Gerätebodenwanne 109.

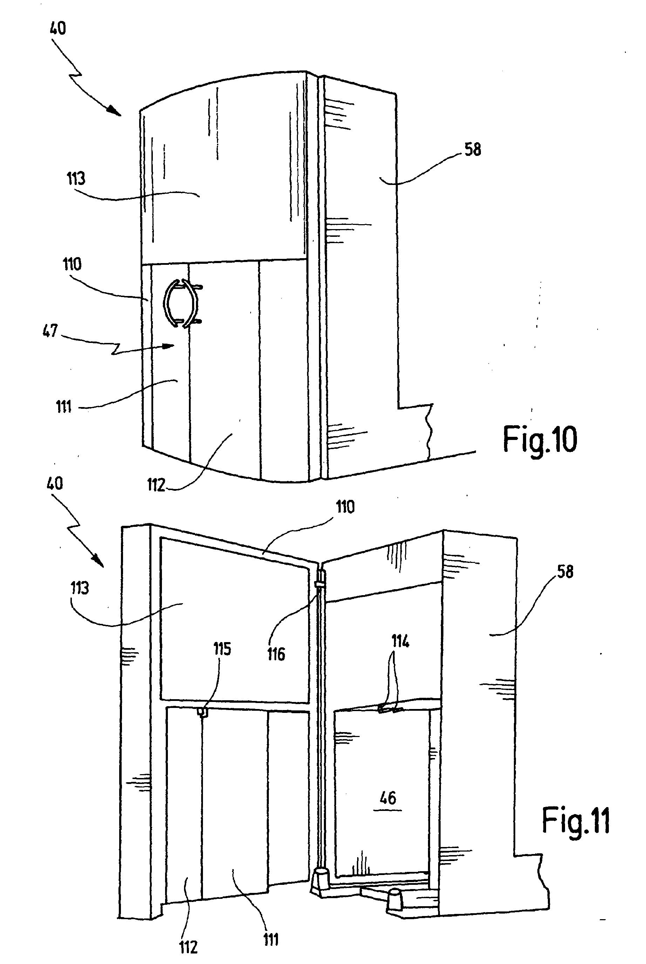

In den Figuren 10 und 11 ist zusätzlich zu der Automationszelle 40 gemäß Fig. 3 der Abschluß der Automationszelle 40 im Bereich der vorderen Stirnfläche im Bereich des ersten Stapelplatzes nach außen dargestellt.

Eine Beschickung des ersten Stapelplatzes 42 ist nur bei geöffneter Bedienungstür 47 möglich. Die Bedienungstür 47 weist zwei nach außen aufschwenkbare Schwenkflügel 111, 112 auf. Dabei dient ein Sichtfenster 113 oberhalb der beiden Schwenkflügel 111, 112 zu einer Einsicht in die Zelle während des Betriebs von außen.

Das Sichtfenster 113 und die beiden Schwenkflügel 111, 112 sind an einer Wartungstür 110 festgelegt, wie im einzelnen aus Fig. 11 zu ersehen ist, die als Ganzes nach außen aufschwenkbar ist und somit die gesamte Stirnfläche der Automationszelle 40 im Bereich des ersten Stapelplatzes 42 freigibt. Die Wartungstür 110 ist sowohl an der linken Seite des vorderen Rahmenteils 58 als auch an der rechten Seite des vorderen Rahmenteils 58 verschwenkbar festgelegt. In Fig. 11 ist lediglich ein Scharnier 116 an der linken Seite beispielhaft dargestellt, wobei die Wartungstür 110 in der um das linke Scharnier nach außen aufgeschwenkten Position dargestellt ist. Die Wartungstür 110 kann statt dessen auch mit ihrem Scharnier an der rechten Seite geschlossen und verriegelt sein, während die Verbindung an der linken Seite geöffnet ist, so daß die Wartungstür um ihren rechten Rand nach außen aufgeschwenkt werden kann. Das Öffnen und Schließen der Verriegelung an der rechten bzw. linken Seite erfolgt mittels eines geeigneten Werkzeuges, z.B. eines Inbus-Schlüssels.

Zusätzlich ist in Fig. 11 noch eine mechanische Verriegelung zwischen der Haube 46 und den beiden Schwenkflügel 111, 112 schematisch angedeutet. An der Haube 46 sind im Bereich ihrer Oberseite zwei Verriegelungselemente 114 angedeutet, die mit entsprechend gestalteten Verriegelungselementen an der Innenseite der Schwenkflügel 111, 112 derart verriegelbar sind, daß ein Öffnen der beiden Schwenkflügel 111, 112 nur dann möglich ist, wenn sich die Haube 46 in der in Fig. 10 dargestellten Position über dem ersten Stapelplatz 42 befindet. Auf diese Weise ist die Berührungssicherheit auch ohne elektrische Absicherung mittels eines Sicherheitsendschalters gewährleistet, was gegenüber aufwendigen Sicherheitsendschaltern eine erhebliche Kostenersparnis bedeutet.

## Patentansprüche

1. Automationszelle zur Handhabung von auf Teileträgern (76) aufgenommenen Teilen (82, 83), mit einem nach außen abgeschlossenen Arbeitsraum (41), in dem ein erster (42), ein zweiter (43) und ein dritter (44) Stapelplatz hintereinander angeordnet sind, von denen der erste gegenüber den übrigen Stapelplätzen (43, 44) berührungssicher abtrennbar ist, und mit einer Umsetzeinrichtung (64), die eine erste, sich in Horizontalrichtung entlang der hintereinander angeordneten Stapelplätze (42, 43, 44) erstreckende Linearachse, sowie eine zweite damit gekoppelte, sich in Vertikalrichtung erstreckende Linearachse aufweist, wobei die Umsetzeinrichtung eine Bewegung von Teileträgern in der Horizontalrichtung (48) und in der Vertikalrichtung, sowie eine Positionierung von Teileträgern (76) für eine zugeordnete Übergabeeinheit (50, 51, 52) erlaubt, wobei die Übergabeeinheit (50, 51, 52) eine Entnahme von Teilen (82, 83) aus den Teileträgern (76) und Überführung zu einer externen Einrichtung (12, 13, 14, 15, 16, 17) außerhalb des Arbeitsraums (41), sowie ein Einführen von Teilen (82, 83) in den Arbeitsraum (41) und ein Einlegen in die Teileträger (76) erlaubt, und wobei der erste Stapelplatz (42) durch eine Bedienungstür (47) von außen in der ersten Horizontalrichtung (48) beschickbar ist, **dadurch gekennzeichnet, daß** der erste Stapelplatz (42) gegenüber dem zweiten (43), dazu benachbarten Stapelplatz durch eine sich im wesentlichen vertikal erstreckende Schottwand (45) und gegenüber dem übrigen Teil des Arbeitsraums (41) durch eine Haube (46) berührungssicher abgetrennt ist, die zumindest zwischen dem ersten (42) und dem zweiten (43) Stapelplatz verfahrbar ist.

2. Automationszelle nach Anspruch 1, **dadurch gekennzeichnet, daß** die Schottwand (45) feststehend ausgebildet ist.

3. Automationszelle nach Anspruch 1 oder 2, **dadurch gekennzeichnet, daß** die Schottwand (45) mit Zentrierflächen (87, 88) zur Führung und Zentrierung von zum ersten Stapelplatz (42) zugeführten Teileträgern (76) versehen ist.

4. Automationszelle nach Anspruch 1 oder 2, **dadurch gekennzeichnet, daß** der Schottwand (45) Führungselemente (89, 90) zugeordnet sind, die zur Zentrierung von zugeführten Teileträgern (76) seitlich auf diese zustellbar angeordnet sind.

5. Automationszelle nach einem der Ansprüche 2 - 4, **dadurch gekennzeichnet, daß** die Haube (46) U-förmig mit einer Deckfläche (93) und mit zwei Seitenflächen (94, 95) ausgebildet ist.

6. Automationszelle nach einem der Ansprüche 2 - 5, **dadurch gekennzeichnet, daß** die Haube (46) zwischen dem ersten (42), dem zweiten (43) und dem dritten (44) Stapelplatz verfahrbar angeordnet ist.

7. Automationszelle nach Anspruch 6, **dadurch gekennzeichnet, daß** die Haube (46) mittels der Umsetzeinrichtung (64) verfahrbar ist.

8. Automationszelle nach Anspruch 6, **dadurch gekennzeichnet, daß** die Haube (46) mit einer Antriebseinrichtung (97) gekoppelt ist, die eine Positionierung über dem ersten (42), dem zweiten (43) oder dem dritten Stapelplatz (44) erlaubt.

9. Automationszelle nach einem der Ansprüche 2 - 8, **dadurch gekennzeichnet, daß** die Haube (46) zur Aufnahme mindestens eines Teileträgers (76') ausgebildet ist.

10. Automationszelle nach einem der Ansprüche 2 - 9, **dadurch gekennzeichnet, daß** zur Verriegelung der Haube (46) eine um ihre Längsachse schwenkbare Welle (98) vorgesehen ist, die mit Verriegelungszapfen (99) versehen ist, die mit einer Zapfenaufnahme (100) an der Haube (46) in vorgegebenen Positionen verriegelbar sind.

11. Automationszelle nach einem der vorhergehenden Ansprüche, **dadurch gekennzeichnet, daß** im Bereich des ersten Stapelplatzes (42) zur Aufnahme von Werkstückträgern (76) von einem Bodenroller in eine definierte Endlage vorzugsweise mit Rollen (101) versehene Führungsschienen (108) vorgesehen sind, die vorzugsweise mit Stellelementen (102) versehen sind.

12. Automationszelle nach einem der vorhergehenden Ansprüche, **dadurch gekennzeichnet, daß** eine Gerätebodenwanne (109) bis unter die Haube (46) und die Schottwand (45) geführt ist, und daß von der Gerätebodenwanne (109) Abtropfflächen (103) hervorstehen, die die Ränder (104) eines Bodenrollers (77) seitlich überlappen.

13. Automationszelle nach einem der vorhergehenden Ansprüche, **dadurch gekennzeichnet, daß** die erste Linearachse der Umsetzeinrichtung zwei zueinander parallele, voneinander beabstandete, sich in Horizontalrichtung erstreckende Horizontalführungen (69) aufweist, zwischen denen eine Greifeinrichtung (70) zur Handhabung eines Teileträgers (76) verfahrbar aufgenommen ist, wobei die Horizontalführungen (69) jeweils an einer Vertikalführung (73) in Vertikalrichtung verfahrbar aufgenommen sind.

14. Automationszelle nach einem der vorhergehenden Ansprüche, **dadurch gekennzeichnet, daß** der erste Stapelplatz (42) nach außen durch mindestens eine Bedienungstür (47) berührungssicher abgeschlossen ist, durch die Teileträger (76) in die Automationszelle (40) ein- und ausgeschleust werden können, und daß zwischen der mindestens einen Bedienungstür (47) und der Haube (46) eine mechanische Verriegelung (114, 115) gebildet ist, die ein Öffnen der mindestens einen Bedienungstür (47) nur dann erlaubt, wenn sich die Haube (46) über dem ersten Stapelplatz (42) befindet.

15. Automationszelle nach Anspruch 14, **dadurch gekennzeichnet, daß** eine Wartungstür (110) an einer Stirnfläche der Automationszelle (40) im Bereich des ersten Stapelplatzes (42) vorgesehen ist, die randseitig an mindestens einer Vertikalseite des vorderen Rahmenteils (58) verschwenkbar festgelegt ist, und daß die mindestens eine Bedienungstür (47) an der Wartungstür (110) vorgesehen ist.

16. Automationszelle nach einem der Ansprüche 9 bis 15, **dadurch gekennzeichnet, daß** auf der Oberseite der Haube (46) eine Schublade (120) zur Aufnahme eines Teileträgers (76') vorgesehen ist, die ein Verfahren des Teileträgers (76) bei geöffneter Bedienungstür (47) nach außen erlaubt.

17. Verfahren zur Handhabung von Teilen (82, 83) in einer Automationszelle (40), in der ein erster (42), ein zweiter (43) und ein dritter (44) Stapelplatz innerhalb eines geschlossenen Arbeitsraums (41) in einer Horizontalrichtung (48) hintereinander angeordnet sind und Teileträger (76) zur Aufnahme der Teile (82, 83) mittels einer Umsetzeinrichtung (64) zwischen den drei Stapelplätzen (42, 43, 44) umgestapelt werden, wobei Teile (82, 83) mittels einer Übergabeinheit (82) aus den Teileträgern (76) entnommen werden, an eine angekoppelte Einrichtung, vorzugsweise eine Bearbeitungseinrichtung (12, 13, 14, 15, 16, 17), außerhalb des Arbeitsraums (41) übergeben werden und Teile (82, 83) aus der angekoppelten Einrichtung aufgenommen und in den Teileträgern (76) abgelegt werden, wobei Teileträgerstapel (105) mit Rohteilen in Horizontalrichtung (48) auf den ersten Stapelplatz (42) in den Arbeitsraum (41) eingeschleust werden und Teileträgerstapel (105) mit Fertigteilen vom ersten Stapelplatz (42) aus dem Arbeitsraum (41) in einer entgegengesetzten Richtung ausgeschleust werden, und wobei Teileträger über eine zwischen dem ersten Stapelplatz (42) und dem zweiten (43), dazu benachbarten Stapelplatz angeordnete, sich im wesentlichen vertikal erstreckende Schottwand (45), hinaus angehoben und in Horizontalrichtung bewegt werden, nachdem eine Haube, die zumindest zwischen dem ersten und dem zweiten Stapelplatz verfahrbar ist, von dem ersten Stapelplatz weg verfahren worden ist.

18. Verfahren nach Anspruch 17, bei dem während mindestens eines Umstapelvorgangs eines Teileträgerstapels (106, 107) von einem Stapelplatz (43, 44) zu einem anderen Stapelplatz (44, 43) nur ein Teil der Rohteile aus einem Teileträger (76) entnommen und gegen Fertigteile aus der angekoppelten Einrichtung (12-17) ausgetauscht werden.

19. Verfahren nach Anspruch 17 oder 18, bei dem während mindestens eines Umstapelvorgangs in Teileträgern (76) noch vorhandene Rohteile gegen Fertigteile aus der angekoppelten Einrichtung (12-17) ausgetauscht werden, um die jeweiligen Teileträger (76) mit Fertigteilen aufzufüllen.

## Claims

1. Automation unit for handling components (82, 83) which are received on component carriers (76), having an outwardly closed workspace (41), in which a first stacking space (42), a second stacking space (43) and a third stacking space (44) are arranged one behind the other, of which the first can be separated in a manner preventing contact from the remaining stacking spaces (43, 44), and having a transfer device (64) which has a first linear axis which extends in a horizontal direction along the stacking spaces (42, 43, 44) which are arranged one behind the other, and a second linear axis which is connected thereto and which extends in a vertical direction, the transfer device allowing movement of component carriers in the horizontal direction (48) and in the vertical direction, as well as positioning of component carriers (76) for an associated transfer unit (50, 51, 52), the transfer unit (50, 51, 52) allowing components (82, 83) to be removed from the component carriers (76) and moved to an external device (12, 13, 14, 15, 16, 17) outside the workspace (41), and components (82, 83) to be introduced into the workspace (41) and inserted in the component carriers (76), and the first stacking space (42) being able to be conveyed through an operating door (47) from outside in the first horizontal direction (48),
**characterised in that**
the first stacking space (42) is separated in a manner preventing contact from the second stacking space (43) which is adjacent thereto by a substantially vertically extending bulkhead wall (45) and from the remainder of the workspace (41) by a hood (46) which can be moved at least between the first stacking space (42) and the second stacking space (43).

2. Automation unit according to claim 1,
**characterised in that**
the bulkhead wall (45) is constructed so as to be fixed.

3. Automation unit according to claim 1 or 2,
**characterised in that**
the bulkhead wall (45) is provided with centring faces (87, 88) for guiding and centring component carriers (76) which are supplied to the first stacking space (42).

4. Automation unit according to claim 1 or 2,
**characterised in that**
guiding elements (89, 90) are associated with the bulkhead wall (45) and are arranged so as to be able to be advanced laterally relative thereto in order to centre supplied component carriers (76).

5. Automation unit according to any one of claims 2 to 4,
**characterised in that**
the hood (46) is constructed so as to be U-shaped with an outer face (93) and two lateral faces (94, 95).

6. Automation unit according to any one of claims 2 to 5,
**characterised in that**
the hood (46) is arranged movably between the first stacking space (42), the second stacking space (43) and the third stacking space (44).

7. Automation unit according to claim 6,
**characterised in that**
the hood (46) can be moved by means of the transfer device (64).

8. Automation unit according to claim 6,
**characterised in that**
the hood (46) is connected to a drive device (97) which allows positioning above the first stacking space (42), the second stacking space (43) or the third stacking space (44).

9. Automation unit according to any one of claims 2 to 8,
**characterised in that**
the hood (46) is constructed in order to receive at least one component carrier (76').

10. Automation unit according to any one of claims 2 to 9,
**characterised in that** there is provided, in order to lock the hood (46), a shaft (98) which can pivot about the longitudinal axis thereof and which is provided with locking pins (99) which can be locked in predetermined positions with a pin receiver (100) on the hood (46).

11. Automation unit according to any one of the preceding claims,
**characterised in that**
guide rails (108) which are preferably provided with rollers (101) and which are preferably provided with actuating members (102) are provided in the region of the first stacking space (42) in order to receive workpiece carriers (76) from a base roller in a defined end position.

12. Automation unit according to any one of the preceding claims,
**characterised in that**
a device base tank (109) is guided as far as under the hood (46) and the bulkhead wall (45), and **in that** drip faces (103) protrude from the device base tank (109) and laterally overlap the edges (104) of a base roller (77).

13. Automation unit according to any one of the preceding claims,
**characterised in that**
the first linear axis of the transfer device has two mutually parallel horizontal guides (69), which are spaced apart from each other and which extend in a horizontal direction, and between which a gripping device (70) is movably received in order to handle a component carrier (76), with the horizontal guides (69) each being received movably in a vertical direction on a vertical guide (73).

14. Automation unit according to any one of the preceding claims,
**characterised in that**
the first stacking space (42) is outwardly closed in a manner preventing contact by at least one operating door (47), by means of which component carriers (76) can be transferred into and out of the automation unit (40),
and **in that** a mechanical locking system (114, 115), which allows the at least one operating door (47) to be opened only when the hood (46) is located above the first stacking space (42), is constructed between the at least one operating door (47) and the hood (46).

15. Automation unit according to claim 14,
**characterised in that**
a maintenance door (110) is provided at an end face of the automation unit (40) in the region of the first stacking space (42) and is pivotably secured at the edge to at least one vertical side of the front frame portion (58), and **in that** the at least one operating door (47) is provided on the maintenance door (110).

16. Automation unit according to any one of claims 9 to 15,
**characterised in that**
a drawer (120) is provided at the upper side of the hood (46) in order to receive a component carrier (76') and allows the component carrier (76) to be moved outwards when the operating door (47) is open.

17. Method for handling components (82, 83) in an automation unit (40), in which a first stacking space (42), a second stacking space (43) and a third stacking space (44) are arranged one behind the other in a horizontal direction (48) inside a closed workspace (41) and component carriers (76) for receiving the components (82, 83) are moved and stacked between the three stacking spaces (42, 43, 44) by means of a transfer device (64), wherein components (82, 83) are removed from the component carriers (76) by means of a transfer unit (82), are transferred to a connected device, preferably a processing device (12, 13, 14, 15, 16, 17), outside the workspace (41) and components (82, 83) are received from the connected device and deposited in the component carriers (76), wherein component carrier stacks (105) having blanks are transferred into the workspace (41) in a horizontal direction (48) onto the first stacking space (42) and component carrier stacks (105) having finished components are transferred from the first stacking space (42) in an opposite direction out of the workspace (41), and wherein component carriers are lifted out above a bulkhead wall (45), which is arranged between the first stacking space (42) and the second stacking space (43) located beside it and which extends substantially vertically, and are moved in a horizontal direction after a hood, which can be moved at least between the first stacking space and the second stacking space, has been moved away from the first stacking space.

18. Method according to claim 17, wherein only a portion of the blanks are removed from a component carrier (76) and exchanged for finished components from the connected device (12-17) during at least one moving and stacking operation of a component carrier stack (106, 107) from one stacking space (43, 44) to another stacking space (44, 43).

19. Method according to claim 17 or 18, wherein blanks which are still present in component carriers (76) are exchanged for finished components from the connected device (12-17) during at least one moving and stacking operation in order to fill the respective component carriers (76) with finished components.

## Revendications

1. Cellule automatisée pour manipuler des pièces (82, 83) reçues sur des supports de pièces (76), comprenant un espace de travail (41) fermé vers l'extérieur, dans laquelle sont successivement disposés un premier (42), un deuxième (43) et un troisième (44) postes d'empilage dont le premier peut être isolé à l'épreuve des contacts avec les autres postes d'empilage (43, 44), et comprenant un dispositif de transfert (64) qui présente un premier axe linéaire, s'étendant en direction horizontale le long des postes d'empilage (42, 43, 44) successivement disposés, ainsi qu'un deuxième axe linéaire, couplé au premier et s'étendant en direction verticale, sachant que le dispositif de transfert permet un déplacement des supports de pièces dans la direction horizontale (48) et dans la direction verticale, ainsi qu'un positionnement des supports de pièces (76) pour une unité de remise associée (50, 51, 52), sachant que l'unité de remise (50, 51, 52) permet de prélever les pièces (82, 83) des supports de pièces (76) et de les transférer à un dispositif externe (12, 13, 14, 15, 16, 17) en dehors de l'espace de travail (41), ainsi que d'introduire des pièces (82, 83) dans l'espace de travail (41) et de les placer dans les supports de pièces (76), et sachant que le premier poste d'empilage (42) peut être chargé de l'extérieur dans la première direction horizontale (48) par une porte de desserte (47), **caractérisée en ce que** le premier poste d'empilage (42) est isolé à l'épreuve des contacts vis-à-vis du deuxième poste d'empilage (43), qui en est voisin, par une cloison étanche (45), et vis-à-vis du reste de l'espace de travail (41) par un capot (46) qui peut être déplacé au moins entre le premier (42) et le deuxième (43) poste d'empilage.

2. Cellule automatisée selon la revendication 1, **caractérisée en ce que** la cloison étanche (45) est conçue fixe.

3. Cellule automatisée selon la revendication 1 ou 2, **caractérisée en ce que** la cloison étanche (45) est pourvue de surfaces de centrage (87, 88) pour guider et centrer les supports de pièces (76) apportés au premier poste d'empilage (42).

4. Cellule automatisée selon la revendication 1 ou 2, **caractérisée en ce que** des éléments de guidage (89, 90) sont associés à la cloison étanche (45), éléments qui sont disposés avec possibilité d'ajustement sur les côtés de celle-ci afin de centrer les supports de pièces apportés (76).

5. Cellule automatisée selon l'une des revendications 2 à 4, **caractérisée en ce que** le capot (46) est réalisé en forme de U avec une face de recouvrement (93) et deux faces latérales (94, 95).

6. Cellule automatisée selon l'une des revendications 2 à 5, **caractérisée en ce que** le capot (46) est disposé à déplacement entre le premier (42), le deuxième (43) et le troisième (44) poste d'empilage.

7. Cellule automatisée selon la revendication 6, **caractérisée en ce que** le capot (46) peut être déplacé au moyen du dispositif de transfert (64).

8. Cellule automatisée selon la revendication 6, **caractérisée en ce que** le capot (46) est couplé à un dispositif d'entraînement (97) qui permet un positionnement au-dessus du premier (42), du deuxième (43) ou du troisième (44) poste d'empilage.

9. Cellule automatisée selon l'une des revendications 2 à 8, **caractérisée en ce que** le capot (46) est conçu pour recevoir au moins un support de pièces (76').

10. Cellule automatisée selon l'une des revendications 2 à 9, **caractérisée en ce qu'**un arbre (98) pouvant pivoter autour de son axe longitudinal est prévu pour verrouiller le capot (46), arbre qui est doté de tenons de verrouillage (99) qui peuvent être verrouillés dans des positions prédéfinies dans un logement de tenons (100) prévu sur le capot (46).

11. Cellule automatisée selon l'une des revendications précédentes, **caractérisée en ce que** des glissières de guidage (108), de préférence pourvues de rouleaux (101), sont prévues dans la région du premier poste d'empilage (42) pour recevoir des supports de pièces (76) d'un plateau à roues dans une position finale définie, et elles sont de préférence pourvues d'éléments de réglage (102).

12. Cellule automatisée selon l'une des revendications précédentes, **caractérisée en ce qu'**une cuve de fond d'appareil (109) s'étend jusqu'en dessous du capot (46) et de la cloison étanche (45), et **en ce que** des surfaces d'égouttage (103) dépassent de la cuve de fond d'appareil (109) et recouvrent latéralement les bords (104) d'un plateau à roues (77).

13. Cellule automatisée selon l'une des revendications précédentes, **caractérisée en ce que** le premier axe linéaire du dispositif de transfert présente deux guides horizontaux (69) parallèles entre eux, mutuellement distants et s'étendant en direction horizontale, entre lesquels est reçu à déplacement un dispositif de préhension (70) destiné à la manipulation d'un support de pièces (76), sachant que les guides horizontaux (69) sont respectivement reçus à déplacement en direction verticale sur un guide vertical (73).

14. Cellule automatisée selon l'une des revendications précédentes, **caractérisée en ce que** le premier poste d'empilage (42) est fermé à l'épreuve des contacts vers l'extérieur par au moins une porte de desserte (47) par laquelle les supports de pièces (76) peuvent être introduits dans la cellule automatisée (40) et en être évacués, et **en ce qu'**un verrouillage mécanique (114, 115) est formé entre la porte de desserte (47) au moins unique et le capot (46), verrouillage qui ne permet l'ouverture de la porte de desserte (47) au moins unique que si le capot (46) se trouve au-dessus du premier poste d'empilage (42).

15. Cellule automatisée selon la revendication 14, **caractérisée en ce qu'**une porte de maintenance (110) est prévue sur une face frontale de la cellule automatisée (40) dans la région du premier poste d'empilage (42), porte qui, sur le bord, est fixée à pivotement sur au moins un côté vertical de la partie avant de châssis (58), et **en ce que** la porte de desserte (47) au moins unique est prévue sur la porte de maintenance (110).

16. Cellule automatisée selon l'une des revendications 9 à 15, **caractérisée en ce qu'**un tiroir (120) destiné à recevoir un support de pièces (76') est prévu sur le dessus du capot (46), tiroir qui permet un déplacement du support de pièces (76') vers l'extérieur lorsque la porte de desserte (47) est ouverte.

17. Procédé pour manipuler des pièces (82, 83) dans une cellule automatisée (40), dans laquelle un premier (42), un deuxième (43) et un troisième (44) postes d'empilage sont successivement disposés dans une direction horizontale (48) à l'intérieur d'un espace de travail fermé (41) et des supports de pièces (76) destinés à recevoir les pièces (82, 83) sont déplacés entre les trois postes d'empilage (42, 43, 44) au moyen d'un dispositif de transfert (64), sachant que des pièces (82, 83) sont prélevées des supports de pièces (76) au moyen d'une unité de remise (50, 51, 52) et remises à un dispositif accouplé, de préférence un dispositif d'usinage (12, 13, 14, 15, 16, 17) en dehors de l'espace de travail (41), et que des pièces (82, 83) provenant du dispositif accouplé sont prises en charge et déposées dans les supports de pièces (76), sachant que des piles (105) de supports de pièces chargés de pièces brutes sont introduites en direction horizontale (48) sur le premier poste d'empilage (42) dans l'espace de travail (41) et que des piles (105) de supports de pièces chargés de pièces finies sont évacuées en direction opposée hors de l'espace de travail (41) depuis le premier poste d'empilage (42), et sachant que des supports de pièces sont soulevés au-delà d'une cloison étanche (45) s'étendant essentiellement verticalement qui est disposée entre le premier poste d'empilage (42) et le deuxième poste d'empilage (43), qui en est voisin, et sont déplacés en direction horizontale, après qu'un capot, qui peut être déplacé au moins entre le premier poste d'empilage et le deuxième poste d'empilage, ait été déplacé en éloignement du premier poste d'empilage.

18. Procédé selon la revendication 17, selon lequel, pendant au moins un processus de transfert d'une pile (106, 107) de supports de pièces d'un poste d'empilage (43, 44) à un autre poste d'empilage (44, 43), seule une partie des pièces brutes sont prélevées d'un support de pièces (76) et remplacées par des pièces finies provenant du dispositif accouplé (12-17).

19. Procédé selon la revendication 17 ou 18, selon lequel, pendant au moins un processus de transfert, des pièces brutes encore présentes dans des supports de pièces (76) sont remplacées par des pièces finies provenant du dispositif accouplé (12-17), afin de remplir de pièces finies les supports de pièces respectifs (76).
